# EUROPEAN PATENT APPLICATION

(11) **EP 4 560 816 A1**
(43) Date of publication of application: **28.05.2025**
(21) Application number: 24209476.1
(22) Date of filing: 29.10.2024
(51) Int. Cl.: H01M 50/383, H01M 50/209, H01M 50/367, H01M 50/358, H01M 50/342

(54) **ENERGY STORAGE APPARATUS**

(30) Priority: 27.11.2023 KR 20230166672; 08.04.2024 KR 20240047324
(71) Applicant: SAMSUNG SDI CO., LTD., Yongin-si, Gyeonggi-do 17084 (KR)
(72) Inventor: Kim, Jeong Woo, 17084 Yongin-si, Gyeonggi-do (KR); Kim, Jin Taek, 17084 Yongin-si, Gyeonggi-do (KR); Woo, Jong Yul, 17084 Yongin-si, Gyeonggi-do (KR)
(74) Representative: Gulde & Partner

(57) **Abstract**

An energy storage apparatus includes: a battery module including a plurality of battery cells arranged in a first direction, each of the battery cells having a vent; and a ventilation unit mounted on the battery module and configured to guide flames ejected from the vent of one of the battery cells in the first direction and to block debris ejected from the one of the battery cells from flowing into adjacent ones of the battery cells.

## Description

### BACKGROUND

### 1. Field

Aspects of embodiments of the present disclosure relate to an energy storage apparatus.

### 2. Description of the Related Art

An energy storage apparatus is configured to store electrical energy and may refer to an apparatus that includes a large number of battery cells, often secondary batteries.

An energy storage apparatus that uses batteries, such as lithium-ion batteries, to store energy should prevent heat from propagating to adjacent cells or battery modules in the event of thermal runaway of a battery. Different from a battery module for an electric vehicle, an energy storage apparatus is a MWh-level rack or container unit rather than a KWh-level module or pack unit, and thus, when heat propagation to adjacent cells or modules occurs, the scale of damage is drastically increased.

To prevent heat spreading in an energy storage apparatus, a method of employing a direct spray system that sprays a fire extinguishing agent directly into a vent of a battery cell may be used. However, there is a delay from the time of detection of thermal runaway in a specific cell to the injection of a fire extinguishing agent in the direct spray system, and flammable oil mist, flames, and/or debris from the battery cell, caused by thermal runaway that occurs before the fire extinguishing agent is sprayed may affect adjacent cells or battery modules, resulting in secondary damage.

The above information disclosed in this Background section is for enhancement of understanding of the background of the present disclosure, and therefore, it may contain information that does not constitute related (or prior) art.

### SUMMARY

In addition to fire suppression using fire extinguishing agents, there is a need to structurally prevent the propagation of flames and the heat propagation due to debris at a module or rack level.

Embodiments of the present disclosure provide a method for reducing heat propagation caused by flammable oil mist, flames, and/or debris between battery cells of a battery module.

An energy storage apparatus, according to an embodiment of the present disclosure, includes: a battery module including a plurality of battery cells arranged in a first direction, each of the battery cells having a vent; and a ventilation unit mounted on the battery module and configured to guide flames ejected from the vent of one of the battery cells in the first direction and to block debris ejected from the one of the battery cells from flowing into adjacent ones of the battery cells.

The ventilation unit may include: a ventilation plate mounted on the battery module including a first plate on the battery module.

The first plate may include louver units aligned with the vents of the battery cells and adjacent to each other along the first direction.

Each of the louver units may have a louver opening aligned with the vent of the corresponding battery cell and a louver cover on one side of the louver opening.

The ventilation unit may include: the ventilation plate mounted on the battery module; an upper plate covering the ventilation plate and forming a duct in the first direction; and a front plate blocking a front side of the duct.

A rear side of the duct may be open.

The energy storage apparatus may further include a fire extinguishing agent direct spray system between the ventilation plate and the upper plate and configured to provide a fire extinguishing agent directly to the vents of the battery cells.

The ventilation plate may include the first plate on the battery module, a second plate extending obliquely upwardly from both sides of the first plate, a third plate extending horizontally from the second plate, and a fourth plate extending downwardly from the third plate and fixed to the battery module.

.

The louver opening may have a triangular, square, pentagonal, hexagonal, oval, or circular shape.

A length of the louver opening in the first direction may be shorter than a length thereof in a second direction that is perpendicular to the first direction.

The louver cover may extend obliquely upwardly from a front of the louver opening in the first direction.

The louver cover may extend obliquely upwardly from a lateral side of the louver opening in a second direction perpendicular to the first direction.

The louver cover may extend around at least half of a circumference of the louver opening.

The louver cover may have a round cross section.

The louver cover may have a polygonal cross section.

The louver opening may have a short diameter in the first direction and a long diameter in a second direction orthogonal to the first direction, and an upper end of the louver cover may extend along the long diameter of the louver opening.

A width of each of the louver units in a second direction orthogonal to the first direction may be in a range of 50% to 90% of a width of the first plate.

The energy storage apparatus may further include: an inner cover having inner openings respectively aligned with the vents of the battery cells on the battery module; and a module cover having a plurality of slits respectively aligned with the inner openings in the inner cover. The ventilation unit may be on the module cover.

The inner cover may include opening side walls protruding upwardly along circumferences of the inner openings, the module cover may include module protrusions protruding downwardly along a circumferences of the slits, and upper sides of the opening side walls may be coupled to the module protrusions.

The ventilation unit may include louver units aligned with the slits in the module cover. Each of the louver units may have a louver opening in which the plurality of slits of the inner cover are located and a louver cover provided on one side of the louver opening.

A longitudinal direction of the slits may be a second direction orthogonal to the first direction.

The energy storage apparatus may further include: an inner cover having inner openings respectively aligned with the vents of the battery cells on the battery module and a plurality of slits in the inner opening; and a module cover having module openings respectively aligned with the plurality of slits in the inner cover. The ventilation unit may be on the module cover.

The ventilation unit may include a ventilation plate mounted on the module cover. The ventilation plate may include louver units respectively aligned with the plurality of slits in the inner cover and the module openings in the module cover.

The inner cover may further include inner opening side walls protruding upwardly along circumferences of the inner openings, and upper sides of the inner opening side walls may be coupled to the module openings in the module cover.

The ventilation unit may include the ventilation plate mounted on the module cover, the module cover may include a pair of module side walls extending adjacent to both sides along the first direction, and the ventilation plate may be coupled to inner portions of the pair of module side walls.

Each of the louver units may include a louver opening to which the plurality of slits in the inner cover are respectively coupled and a louver cover on one side of the louver opening.

The louver cover may overlap the plurality of slits in the inner cover.

### BRIEF DESCRIPTION OF THE DRAWINGS

FIG. 1 is a perspective view of an energy storage apparatus according to an embodiment of the present disclosure.
FIG. 2 is a perspective view of a battery module and a ventilation unit of the energy storage apparatus shown in FIG. 1.
FIG. 3 is a cross-sectional perspective view taken along the line III-III in FIG. 2.
FIG. 4 is an exploded perspective view of the battery module and the ventilation unit in the energy storage apparatus shown in FIG. 1.
FIG. 5 is a perspective view of a ventilation plate of the energy storage apparatus shown in FIG. 1.
FIG. 6 is a partial cross-sectional view taken along the line VI-VI in FIG. 2.
FIG. 7 is a diagram describing flame paths formed by the ventilation unit of the energy storage apparatus according to an embodiment of the present disclosure.
FIG. 8 is a diagram describing debris paths formed by the ventilation unit of the energy storage apparatus according to an embodiment of the present disclosure.
FIG. 9 is a perspective view of a battery module and a ventilation unit in an energy storage apparatus according to another embodiment of the present disclosure.
FIG. 10 is an exploded perspective view of the battery module and the ventilation unit in the energy storage apparatus shown in FIG. 9.
FIG. 11 is a partial cross-sectional view taken along the line X-X in FIG. 9.
FIG. 12 is a perspective view of an inner cover in an energy storage apparatus according to another embodiment of the present disclosure.
FIG. 13 is a perspective view of a module cover in an energy storage apparatus according to another embodiment of the present disclosure.
FIGS. 14A and 14B are a perspective view and a cross-sectional view, respectively, of a louver unit in an energy storage apparatus according to another embodiment of the present disclosure.
FIG. 15 is a diagram describing flame and/or debris paths formed by a ventilation unit in the energy storage apparatus according to an embodiment of the present disclosure.

### DETAILED DESCRIPTION

Hereinafter, embodiments of the present disclosure will be described, in detail, with reference to the accompanying drawings.

Embodiments of the present disclosure are provided to more fully describe the aspects and features of the present disclosure to those skilled in the art. The following embodiments may be embodied in many different forms, and the present disclosure should not be construed as being limited to the embodiments set forth herein. Rather, these embodiments are provided so that this disclosure will be thorough and complete and will fully convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

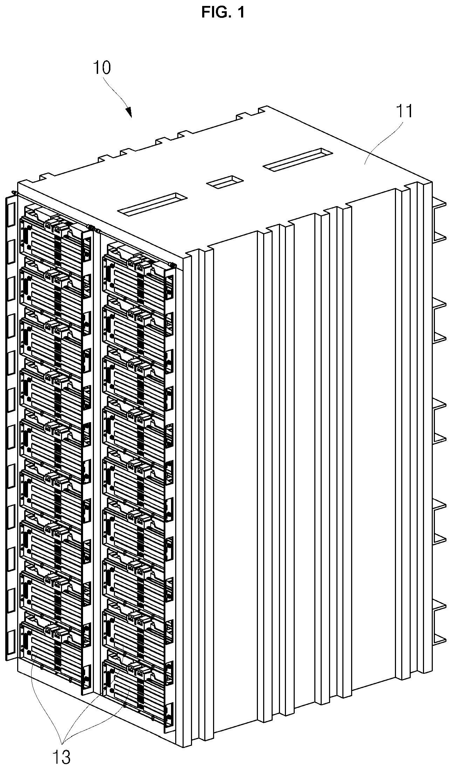

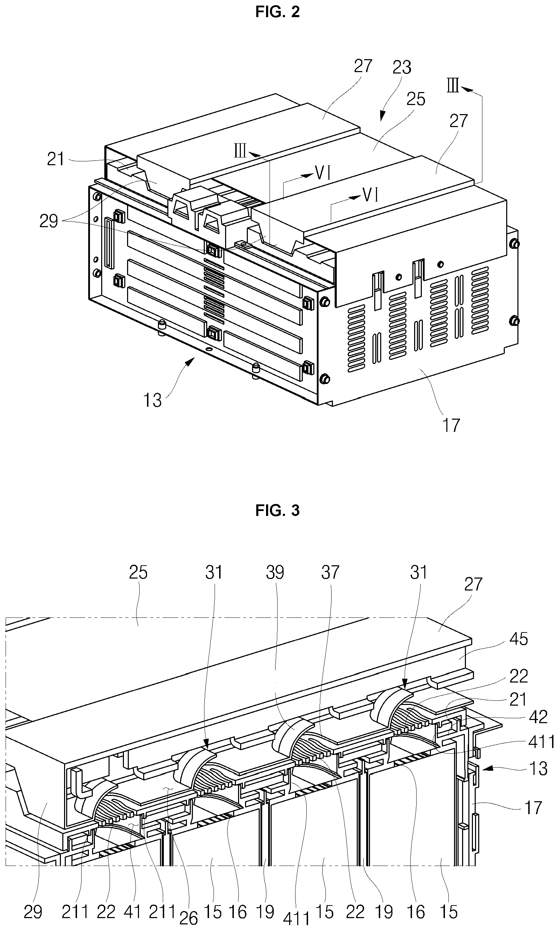

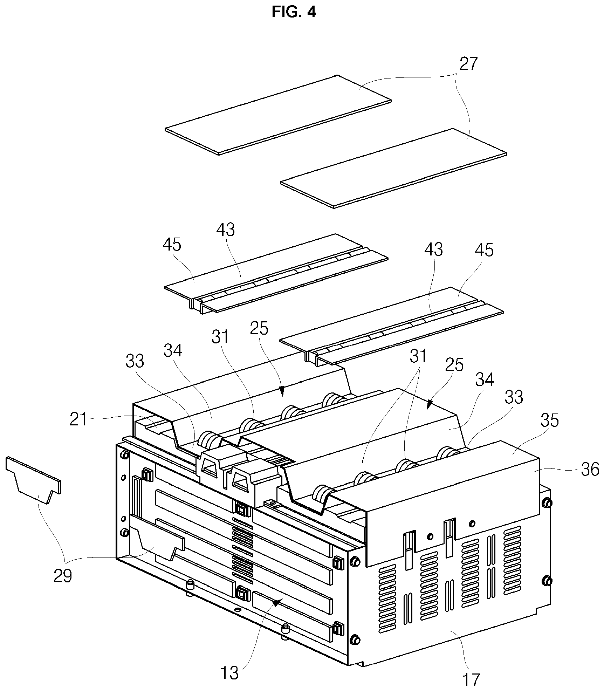

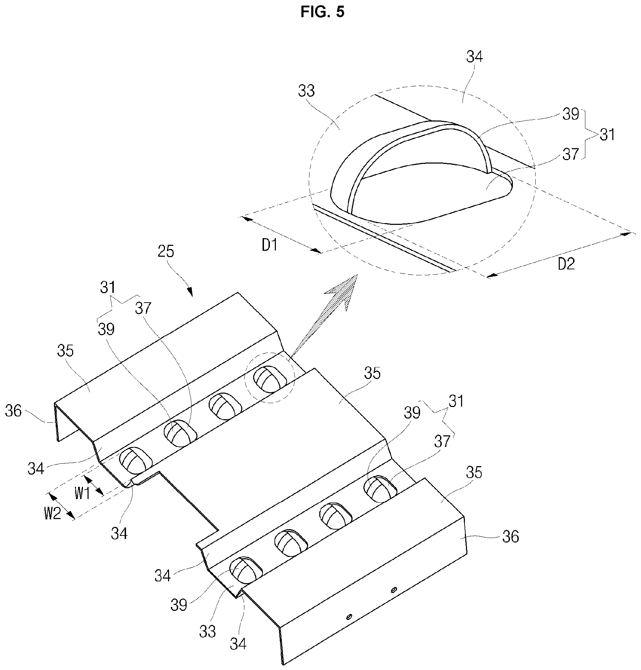

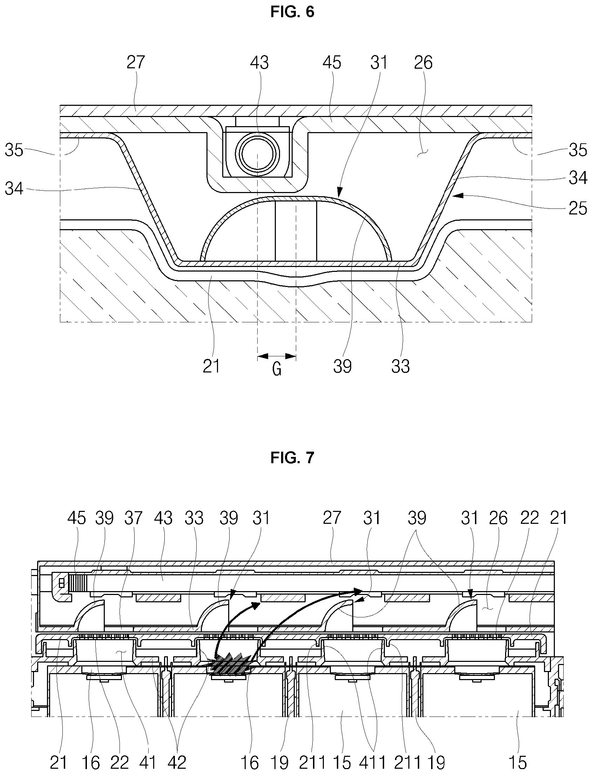

FIG. 1 is a perspective view of an energy storage apparatus 10 according to an embodiment of the present disclosure, FIG. 2 is a perspective view showing a battery module and a ventilation unit of the energy storage apparatus shown in FIG. 1, FIG. 3 is a cross-sectional perspective view taken along the line III-III in FIG. 2, FIG. 4 is an exploded perspective view of the battery module and the ventilation unit shown in FIG. 2, FIG. 5 is a perspective view of a ventilation plate of the energy storage apparatus shown in FIG. 1, and FIG. 6 is a partial cross-sectional view taken along the line VI-VI in FIG. 2.

Referring to FIG. 1, an energy storage apparatus 10, according to an embodiment of the present disclosure, may include a rack 11 and a plurality of battery modules 13 accommodated inside the rack 11. In one or more embodiments, the rack 11 may be assembled by combining (e.g., connecting) a plurality of frames and panels and may be a structure having a substantially rectangular parallelepiped shape. In one or more embodiments, the battery modules 13 may be arranged inside the rack 11 in a plurality of columns, and in each column, the plurality of battery modules 13 may be arranged adjacent to each other in the vertical direction. The number and arrangement of the accommodated battery modules 13 may vary. In one or more embodiments, a plurality of racks 11 may be accommodated inside a container to provide (or to form) an energy storage apparatus.

The battery module 13 may include a plurality of battery cells 15 arranged in a first direction, for example, in a horizontal direction in FIG. 3. Referring to FIGS. 2 and 3, the battery module 13 may include a casing 17, in which a plurality of spaces are formed, and one or more of the battery cells 15 may be placed in (e.g., accommodated in) each of the plurality of spaces. Referring to FIG. 3, in one or more embodiments, the battery modules 13 may further include insulating members 19 spaced apart in the first direction between the battery cells 15, and the respective battery cells 15 are located in the spaces defined by (e.g., defined between) the insulating members 19. The casing 17 may include a module cover 21 disposed on the upper side of the battery cells 15, and the module cover 21 may include a plurality of slits (e.g., elongated openings) 22 that allow air to be introduced into the spaces where the battery cells 15 are disposed and/or that allow air to be discharged from the spaces in which the battery cells 15 are disposed. The slits 22 may be formed so that their longitudinal direction is a second direction orthogonal to the first direction. Referring to FIG. 3, in one or more embodiments, the plurality of slits 22 may be arranged in (e.g., may be adjacent to each other in) the first direction to correspond to the plurality of battery cells 15, respectively.

The slits 22 may be provided at positions corresponding to vents 16 of the battery cells 15. An inner cover 42 having inner openings 41 may be provided on the battery cells 15, and the module cover 21 may be provided on the inner cover 42. In one or more embodiments, the inner openings 41 of the inner cover 42 may be formed at positions corresponding to the vents 16 of the battery cells 15, and the slits 22 in the module cover 21 may be formed at positions corresponding to the inner openings 41 of the inner cover 42. In one or more embodiments, the inner openings 41 may include or may be referred to as ducts.

In one or more embodiments, the inner cover 42 may have inner opening side walls 411 protruding upwardly along the circumferences of the inner openings 41. The inner opening side walls 411 may be provided to generally surround (e.g., to extend around a periphery of) the vent 16 on the upper side of the vent 16. In one or more embodiments, the module cover 21 may further include module protrusions 211 protruding downwardly along the circumference of the slits 22. An internal area occupied by the module protrusions 211 may be larger than an internal area formed by (e.g., defined by) the inner opening side walls 411. In one or more embodiments, the upper sides of the inner opening side walls 411 may be coupled to the module protrusions 211. Thus, the slits 22 in the module cover 21 may be generally seated on the inner opening side walls 411 of the inner cover 42. The ventilation unit 23 may be mounted on the battery module 13. The ventilation unit 23 may be configured to extend along the first direction and may cover upper portions (e.g., upper surfaces) of the plurality of battery cells 15 accommodated in the battery module 13. The ventilation unit 23 may be configured to guide flammable oil mist, flames, and/or debris ejected from (or through) any one of the vents 16 of the battery cells 15 in the first direction and to block the ejected debris from flowing into adjacent battery cells 15.

Referring to FIGS. 2 to 4, the ventilation unit 23 may include a ventilation plate 25 mounted on the battery module 13 and an upper plate 27 that covers the ventilation plate 25 to configure (e.g., to form) the duct 26 in the first direction. In one or more embodiments, the ventilation plate 25 may be configured to cover the upper side of two rows of battery cells 15 arranged along the first direction, and the two upper plates 27 may be placed to cover the ventilation plate 25 while placed on the upper sides of the battery cells 15 in each row. Accordingly, two ducts 26 extending in the first direction may be formed on the battery cells 15 arranged in two rows.

The ventilation plate 25 may include louver units 31 provided in areas corresponding to the vents 16 of the battery cells 15. The louver units (e.g., the louvers) 31 may block the inflow of flammable oil mist, flames, and/or debris while allowing the inflow and outflow of air.

The ventilation unit 23 may include a front plate 29 that blocks the front sides of the ducts 26 formed by the ventilation plate 25 and the upper plate 27. The front plate 29 may block the front sides of the ducts 26, that is, the upstream side of the duct 26 in the first direction. The rear sides of the ducts 26, that is, the downstream side of the ducts 26 in the first direction, may be open. With this configuration of the ducts 26, flames generated in the battery cells 15 may be discharged to the ducts 26 through the louver units 31, and flame paths may be formed in the first direction within the ducts 26.

Referring to FIGS. 4 and 5, the ventilation plate 25 may include a first plate 33 provided on the battery module 13, a second plate 34 extending obliquely upwardly from one end of the first plate 33, a third plate 35 extending horizontally from one end of the second plate 34, and a fourth plate 36 extending downwardly from the third plate 35 and fixed to the battery module 13. The first plate 33 may extend in the horizontal direction and may be configured so that two first plates 33 are each positioned on top of the battery cells 15 arranged in two rows. The second plate 34 may extend from both ends of the first plate 33, respectively (e.g., from opposite ends of the first plate 33). The third plate 35 may extend horizontally from both ends of the second plate 34, respectively. The fourth plate 36 may extend from the outer end of the third plate 35 disposed on both sides in the width direction of the ventilation plate 25, and the fourth plate 36 may extend downwardly and may be fixed to the casing 17 of the battery module 13.

The louver units 31 may be formed in areas corresponding to (e.g., aligned with) the slits 22 in the module cover 21, and a plurality of louver units 31 may be formed on the first plate 33 along the first direction. The upper plate 27 may be configured to be connected to the third plate 35 in a second direction orthogonal to the first direction while extending in the first direction. Accordingly, the ducts 26 may be formed by (e.g., may be defined by) the first plate 33, the second plate 34, and the upper plate 27.

Referring to FIG. 5, each of the louver units 31 may have a louver opening 37 provided in an area corresponding to (e.g., aligned with) each of the vents 16 of the battery cells 15 and a louver cover 39 provided on (e.g., closing or covering) one side of the louver opening 37. The louver opening 37 may have a triangular, square, pentagonal, hexagonal, oval, or circular shape. The louver opening 37 may have a shape in which the length thereof in the first direction is shorter than the length in the second direction orthogonal to the first direction. For example, referring to the enlarged view of the louver unit 31 in FIG. 5, the louver opening 37, defined by the dotted circle, may have a shorter diameter (D1) along the first direction and a longer diameter (D2) along the second direction orthogonal to the first direction. Based on this configuration of the louver opening 37, flames and debris can be discharged smoothly through the louver opening 37 while the possibility of flames and debris entering other battery cells 15 through the louver opening 37 can be reduced.

The louver cover 39 may be disposed on the upstream side of the louver opening 37 along the first direction. The louver cover 39 may extend obliquely upwardly from the front of the louver opening 37 located along the first direction. The louver cover 39 may extend obliquely upwardly from a lateral side of the louver opening 37 located along the second direction orthogonal to the first direction.

Referring to FIG. 5, the louver cover 39 may extend from (e.g., may cover) at least half of the circumference of the louver opening 37. The upper end of the louver cover 39 may be provided along the longer diameter of the louver opening 37. Referring to FIG. 5, the width (W1) of the louver unit 31 along the second direction orthogonal to the first direction may be in a range of approximately 50% to approximately 90% of the width (W2) of the first plate 33. The cross-sectional shape of the louver cover 39 may be round or polygonal.

A fire extinguishing agent direct spray system 43 that is configured to provide a fire extinguishing agent directly to the vent 16 of the battery cell 15 may be further provided. The fire extinguishing agent direct spray system 43 may be provided between the ventilation plate 25 and the upper plate 27. Referring to FIGS. 3 to 6, the fire extinguishing agent direct spray system 43 may be disposed in the upper part of the duct 26 formed by the ventilation plate 25 and the upper plate 27. The fire extinguishing agent direct spray system 43 may include a spray pipe configured to spray the fire extinguishing agent. Referring to FIG. 6, the spray pipe may be mounted on a guide rail 45 of the rack 11, and the spray pipe may be eccentrically arranged to be spaced apart from the vent 16 of the battery cell 15 by a distance G in the second direction (e.g., the spray pipe may be offset from a center of the vent 16 of the battery cell 15 by a distance G in the second direction). The spray pipe may be accommodated within a recess provided in the guide rail 45.

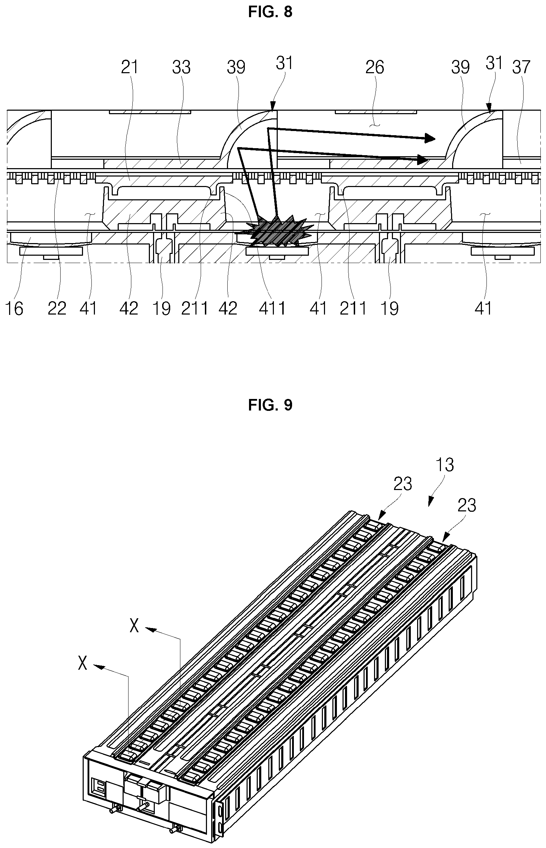

FIG. 7 is a diagram describing flame paths formed by the ventilation unit of the energy storage apparatus according to an embodiment of the present disclosure, and FIG. 8 is a diagram describing debris paths formed by the ventilation unit of the energy storage apparatus according to an embodiment of the present disclosure. Referring to FIG. 7, flames discharged from the battery cell 15 can be discharged through the louver opening 37 in the louver unit 31, and the flames are guided downstream in the first direction by the louver cover 39. Accordingly, the flame paths indicated by arrows along the first direction may be formed within the duct 26, and the louver cover 39 may impede the flow of flames upstream in the first direction and into downstream louver openings 37, thereby preventing flames from being induced to the battery cells 15 through the louver opening 37 in an adjacent louver unit 31.

In one or more embodiments, referring to FIG. 8, the debris ejected from the battery cell 15 can be discharged through the louver opening 37 in the louver unit 31, and the debris may be guided downstream in the first direction by the louver cover 39. Accordingly, the debris paths indicated by arrows may be formed in the first direction within the duct 26, and the louver cover 39 may impede the flow of debris upstream in the first direction and into downstream louver openings 37, thereby preventing debris from entering the battery cells 15 through the louver openings 37 in the adjacent louver units 31.

Hereinafter, an energy storage apparatus according to another embodiment of the present disclosure will be described. The energy storage apparatus according to another embodiment of the present disclosure may be similar to or the same as the energy storage apparatus according to the previously-described embodiment of the present disclosure except for a ventilation unit including a ventilation plate, an inner cover, and a module cover. Therefore, the following description will primarily focus on the differences between these embodiments.

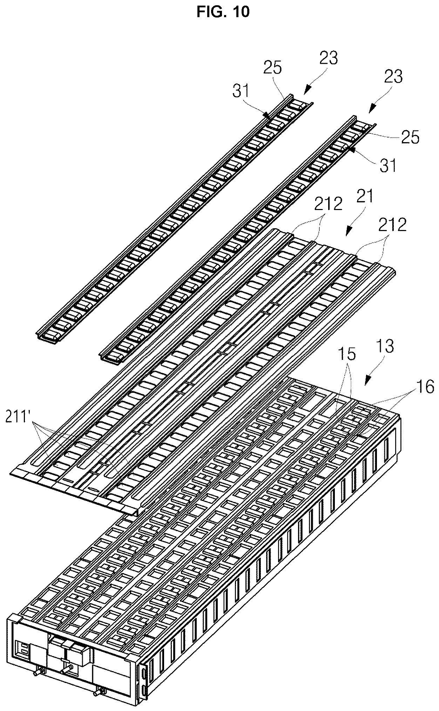

FIG. 9 is a perspective view of a battery module 13 and a ventilation unit 23 in an energy storage apparatus according to another embodiment of the present disclosure, and FIG. 10 is an exploded perspective view of the battery module 13 and the ventilation unit 23 in the energy storage apparatus shown in FIG. 9. Referring to FIGS. 9 and 10, the ventilation unit 23 may include a ventilation plate 25 and louver units 31 mounted on the module cover 21. The ventilation plate 25 may also be referred to as a louver plate. In one or more embodiments, the module cover 21 may include a pair of module side walls 212 extending in a first direction. The pair of module side walls 212 may be spaced apart from each other, and module openings 211' may be arranged in the first direction between the pair of module side walls 212. The ventilation plate 25 may be coupled to inner portions of the pair of module side walls 212. In one or more embodiments, the ventilation plate 25 may be elongated in the first direction as well and may be coupled between the pair of module side walls 212. In another embodiment of the present disclosure, the ventilation plate 25 may include only the first plate 33 and may omit the second, third, and fourth plates 34, 35, and 36. In other words, in another embodiment of the present disclosure, the ventilation plate 25 may be secured on the module cover 21 by the pair of module side walls 212.

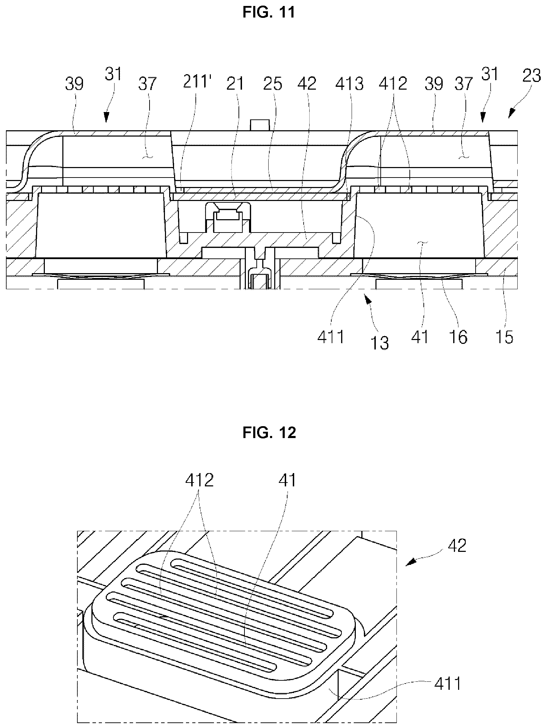

FIG. 11 is a partial cross-sectional view taken along the line X-X in FIG. 9. Referring to FIG. 11, the inner cover 42 may be mounted on the battery module 13. The inner cover 42 may have inner openings 41 formed in areas corresponding to (e.g., aligned with) the vents 16 of the battery cells 15, inner opening side walls 411 protruding upwardly from the circumferences of the inner openings 41, and a plurality of slits 412 formed in the upper side of the inner opening side wall 411 (e.g., overlapping the inner opening). In one or more embodiments, the portions between the plurality of slits 412 may block parts of the inner openings 41. In addition, the module cover 21 may be mounted on the inner cover 42. The module cover 21 may include the inner openings 41 formed in the inner cover 42, inner opening side walls 411, and/or module openings 211' formed in areas corresponding to the plurality of slits 412. In addition, the ventilation unit 23, that is, the ventilation plate 25, may be provided on the module cover 21.

In one or more embodiments, the upper sides of the inner opening side walls 411 may be coupled to the module openings 211' in the module cover 21. In one or more embodiments, the plurality of slits 412 may be exposed and/or may protrude upwardly through the module openings 211' in the module cover 21. In one or more embodiments, steps 413 are formed on the outer surface of the inner opening side walls 411, and a portion of the module cover 21 may be mounted on the steps 413.

In one or more embodiments, the louver units 31 may be provided on the ventilation plate 25 and may be provided in areas corresponding to (e.g., aligned with) the inner openings 41 in the inner cover 42, the inner opening side walls 411, the plurality of slits 412, and/or the module openings 211' in the module cover 21. In one or more embodiments, each of the louver units 31 may have a louver opening 37 in which the plurality of slits 412 of the inner cover 42 are located and a louver cover 39 provided on one side of the louver opening 37.

In one or more embodiments, the louver cover 39 may overlap and may be spaced apart from the inner openings 41, the inner opening side walls 411, the plurality of slits 412, and/or the module openings 211' in the inner cover 42. In other words, while in the above-described embodiment, the louver cover 39 overlaps approximately half of the area of the plurality of slits 222, in another embodiment, the louver cover 39 may overlap most of the area of the plurality of slits 412.

FIG. 12 is a perspective view of an inner cover 42 in an energy storage apparatus according to another embodiment of the present disclosure. Referring to FIG. 12 , the inner cover 42 may have inner opening side walls 411 that are approximately square or oval in a plan view and a plurality of slits 412 provided in the upper sides of the inner opening side walls 411. The inner opening side walls 411 may have inner openings 41 defined therein, and the inner openings 41 may be connected to (e.g., may be in fluid communication with) the upper sides through the plurality of slits 412. In one or more embodiments, the inner cover 42 may further include steps 413 provided on the outer surface of the inner opening side walls 411. In one or more embodiments, the steps 413 may have an approximately tower shape when viewed in a plan view along the outer surface of the inner opening side walls 411. As described above, the module openings 211' in the module cover 21 may be coupled to the inner opening side walls 411 and the plurality of slits 412, and a portion of the module cover 21 may be seated on the steps 413.

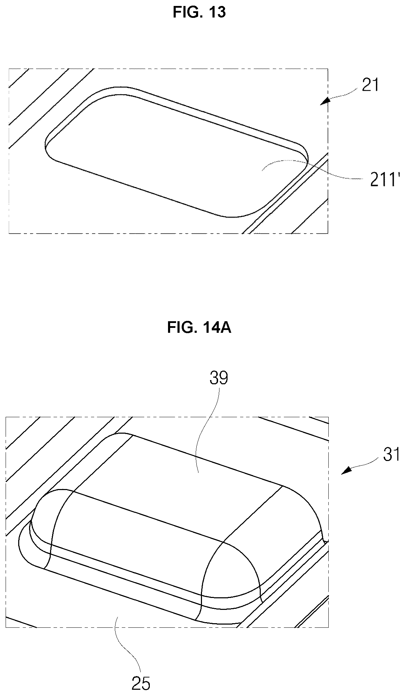

FIG. 13 is a perspective view of a module cover 21 in an energy storage apparatus according to another embodiment of the present disclosure. Referring to FIG. 13, the module cover 21 may have module openings 211', and the module openings 211' may have a substantially square or approximately elliptical shape when viewed in a plan view. As described above, the module openings 211' in the module cover 21 may be coupled to the inner opening side walls 411 and the plurality of slits 412 of the inner cover 42.

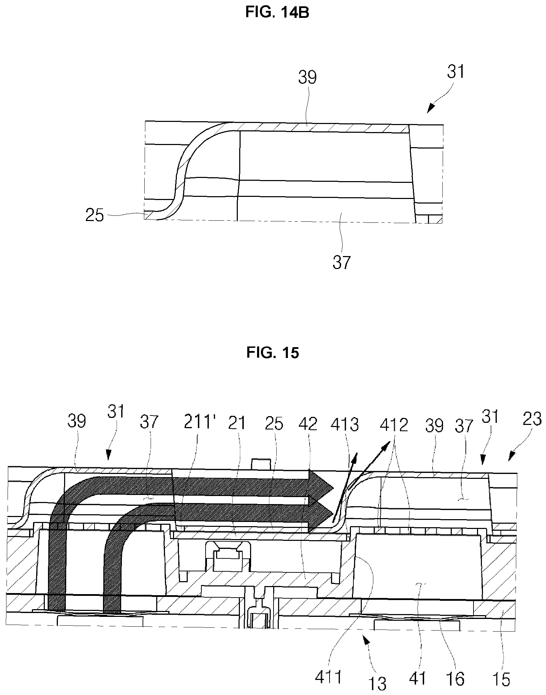

FIGS. 14A and 14B are a perspective view and a cross-sectional view, respectively, of a louver unit 31 in an energy storage apparatus according to another embodiment of the present disclosure. Referring to FIGS. 14A and 14B, louver units 31 may be provided on a ventilation plate (e.g., a louver plate) 25. In one or more embodiments, the louver units 31 may be provided in areas corresponding to (e.g., aligned with) the inner openings 41 in the inner cover 42, the inner opening side walls 411, the plurality of slits 412, and the module openings 211' in the module cover 21. In one or more embodiments, each of the louver units 31 may have a louver opening 37 in which the inner openings 41 of the inner cover 42 and the inner opening side walls 411 are coupled and a louver cover 39 provided on one side of the louver opening 37.

In one or more embodiments, the planar shape of the louver opening 37 may be similar to or the same as that of the module openings 211' in the module cover 21. In one or more embodiments, the size of the louver opening 37 may be larger than that of the module openings 211'. In one or more embodiments, the horizontal length of the louver cover 39 in the first direction may be smaller than the horizontal length of the louver opening 37 in the first direction. In one or more embodiments, the horizontal length of the louver cover 39 in the second direction may be similar to or the same as the horizontal length of the louver opening 37 in the second direction.

FIG. 15 is a diagram describing flame and/or debris paths formed by a ventilation unit 23 in the energy storage apparatus according to an embodiment of the present disclosure. Referring to FIG. 15, flammable oil mist, flames, and/or debris ejected from the vents 16 of the battery cells 15 may pass through the inner cover 42 and the module cover 21 to be discharged through the louver units 31. In one or more embodiments, flames or debris may be discharged through the louver opening 37, and the direction in which the flames or debris are ejected may be guided downstream in the first direction by the louver cover 39. Accordingly, the flame paths indicated by arrows in the first direction may be formed, and the louver cover 39 may impede the flow of flames upstream in the first direction and into adjacent battery cells 15, thereby preventing flames from being induced to the battery cells 15 through the louver opening 37 of an adjacent louver unit 31.

As described above, according to embodiments of the present disclosure, flammable oil mist, flames, and/or debris ejected from a vent of one battery cell can be prevented from flowing into adjacent battery cells.

While some embodiments of an energy storage apparatus according to the present disclosure have been described above, the present disclosure is not limited to the above-described embodiments.

## Claims

1. An energy storage apparatus (10) comprising:
a battery module (13) comprising a plurality of battery cells (15) arranged in a first direction, each of the battery cells (15) having a vent (16); and
a ventilation unit (23) mounted on the battery module (13) and configured to guide flames ejected from the vent (16) of one of the battery cells (15) in the first direction and to block debris ejected from the one of the battery cells (15) from flowing into adjacent ones of the battery cells (15).

2. The energy storage apparatus (10) as claimed in claim 1, wherein the ventilation unit (23) comprises:
a ventilation plate (25) mounted on the battery module (13);
an upper plate (27) covering the ventilation plate (25) and forming a duct (26) in the first direction; and
a front plate (29) blocking a front side of the duct (26).

3. The energy storage apparatus as claimed in claim 2, wherein a rear side of the duct (26) is open, and/or further comprising a fire extinguishing agent direct spray system (43) between the ventilation plate (25) and the upper plate (27) and configured to provide a fire extinguishing agent directly to the vents (16) of the battery cells (15).

4. The energy storage apparatus (10) as claimed in claim 2 or 3, wherein the ventilation plate (25) comprises a first plate (33) on the battery module (13), a second plate (34) extending obliquely upwardly from both sides of the first plate (33), a third plate (35) extending horizontally from the second plate (34), and a fourth plate (36) extending downwardly from the third plate (35) and fixed to the battery module (13).

5. The energy storage apparatus (10) as claimed in claim 4, wherein the first plate (33) comprises louver units (31) aligned with the vents (16) of the battery cells (15) and adjacent to each other along the first direction.

6. The energy storage apparatus (10) as claimed in claim 5, wherein each of the louver units (31) has a louver opening (37) aligned with the vent (16) of the corresponding battery cell (15) and a louver cover (39) on one side of the louver opening (37).

7. The energy storage apparatus (10) as claimed in claim 6, wherein the louver opening (37) has a triangular, square, pentagonal, hexagonal, oval, or circular shape, and/or wherein a length of the louver opening (37) in the first direction is shorter than a length thereof in a second direction that is perpendicular to the first direction.

8. The energy storage apparatus (10) as claimed in claim 6 or 7, wherein the louver cover (39) extends obliquely upwardly from a front of the louver opening (37) in the first direction, or wherein the louver cover (39) extends obliquely upwardly from a lateral side of the louver opening (37) in a second direction perpendicular to the first direction.

9. The energy storage apparatus (10) as claimed in any of claims 6 to 8, wherein the louver cover (39) extends around at least half of a circumference of the louver opening (37), and/or
wherein the louver opening (37) has a short diameter in the first direction and a long diameter in a second direction orthogonal to the first direction, and
wherein an upper end of the louver cover (39) extends along the long diameter of the louver opening (37).

10. The energy storage apparatus as claimed in any of claims 6 to 9, wherein the louver cover (39) has a round cross section, or
wherein the louver cover (39) has a polygonal cross section, and/or
wherein a width of each of the louver units (31) in a second direction orthogonal to the first direction is in a range of 50% to 90% of a width of the first plate (33).

11. The energy storage apparatus (10) as claimed in claim 1, further comprising:
an inner cover (42) having inner openings (41) respectively aligned with the vents (16) of the battery cells (15) on the battery module (13); and
a module cover (21) having a plurality of slits (22, 222, 412) respectively aligned with the inner openings (41) in the inner cover (42),
wherein the ventilation unit (23) is on the module cover (21).

12. The energy storage apparatus (10) as claimed in claim 11, wherein the inner cover (42) comprises opening side walls protruding upwardly along circumferences of the inner openings (41),
wherein the module cover (21) comprises module protrusions (211) protruding downwardly along a circumferences of the slits (22, 222, 412), and
wherein upper sides of the opening side walls are coupled to the module protrusions (211).

13. The energy storage apparatus (10) as claimed in claim 11 or 12, wherein the ventilation unit (23) comprises louver units (31) aligned with the slits (22, 222, 412) in the module cover (21), and/or wherein a longitudinal direction of the slits (22, 222, 412) is a second direction orthogonal to the first direction.

14. The energy storage apparatus (10) as claimed in claim 1, further comprising:
an inner cover (42) having inner openings (41) respectively aligned with the vents (16) of the battery cells (15) on the battery module (13) and a plurality of slits (22, 222, 412) in the inner opening (41); and
a module cover (21) having module openings (211') respectively aligned with the plurality of slits (22, 222, 412) in the inner cover (42),
wherein the ventilation unit (23) is on the module cover (21).

15. The energy storage apparatus (10) as claimed in claim 14, wherein the inner cover (42) further comprises inner opening side walls (411) protruding upwardly along circumferences of the inner openings (41), and
wherein upper sides of the inner opening side walls (411) are coupled to the module openings (211') in the module cover (21), and/or wherein the ventilation unit (23) comprises a ventilation plate (25) mounted on the module cover (21),
wherein the module cover (21) comprises a pair of module side walls (212) extending adjacent to both sides along the first direction, and
wherein the ventilation plate (25) is coupled to inner portions of the pair of module side walls (212).

16. The energy storage apparatus (10) as claimed in claim 15, wherein the ventilation plate (25) comprises louver units (31) respectively aligned with the plurality of slits (22, 222, 412) in the inner cover (42) and the module openings (211') in the module cover (21).

17. The energy storage apparatus (10) as claimed in claim 16, wherein each of the louver units (31) comprises a louver opening (37) to which the plurality of slits (22, 222, 412) in the inner cover (42) are respectively coupled and a louver cover (39) on one side of the louver opening (37), and/or
wherein the louver cover (39) overlaps the plurality of slits (22, 222, 412) in the inner cover (42).
